# FASCICULE DE BREVET EUROPEEN

(11) **EP 0 723 327 B1**
(45) Date de publication et mention de la délivrance du brevet: **20.09.2000**
(21) Numéro de dépôt: 96400147.3
(22) Date de dépôt: 22.01.1996
(51) Int. Cl.: H02J 7/14

(54) **Dispositif sécurisé d'alimentation électrique en régime temporaire de surtension de circuits auxiliaires d'un véhicule automobile, notamment d'un pare-brise chauffant**
Gesicherte Stromversorgungsvorrichtung für die Nebenschaltungen eines Fahrzeuges insbesondere für beheizbare Windschutzscheibe unter zeitweiligem Überspannungszustand
Secure power supply for the auxiliary circuits of a motor vehicle being under temporary overvoltage conditions, especially for heatable windshield

(30) Priorité: 23.01.1995 FR 9500710
(43) Date de publication de la demande: 24.07.1996
(73) Titulaire: VALEO EQUIPEMENTS ELECTRIQUES MOTEUR, 94000 Créteil (FR)
(72) Inventeur: Canitrot, Didier, F-94410 Saint-Maurice (FR); Plasse, Cédric, F-92380 Garches (FR)
(74) Mandataire: Le Forestier, Eric

(56) Documents cités:
- EP-A- 0 246 976
- EP-A- 0 338 926
- EP-A- 0 390 698
- US-A- 5 068 589

## Description

La présente invention concerne un système d'alimentation électrique régulée en tension permettant, en régime temporaire, l'alimentation en surtension de certains circuits auxiliaires, notamment d'un véhicule automobile.

Les circuits électriques d'un véhicule automobile sont habituellement alimentés par une batterie d'accumulateurs chargée par un alternateur dont le courant d'excitation est régulé par un régulateur.

Il est le plus souvent avantageux de subdiviser en fait les circuits électriques du véhicule en un circuit principal et un ou plusieurs circuits auxiliaires.

Le circuit principal, que l'on appellera par la suite "réseau de bord", comprend les circuits d'allumage, de charge de batterie, de ventilation, d'éclairage, etc. et il est alimenté sous une tension que l'on appellera "tension nominale", qui est généralement de l'ordre de 14 V pour une voiture particulière et de 28 V pour un poids lourd.

Le circuit auxiliaire, quant à lui, correspond généralement à un système de chauffage électrique rapide permettant d'assurer le dégivrage du pare-brise, de la lunette arrière, le chauffage des sièges, etc. Ce circuit auxiliaire peut être alimenté soit sous tension nominale, soit une tension plus élevée, que l'on appellera "surtension" ou "haute tension", notablement supérieure à la tension nominale, par exemple lorsque le conducteur souhaite réaliser un dégivrage rapide du pare-brise avant de prendre la route. On notera incidemment que cette valeur de surtension n'est pas nécessairement unique, et peut prendre notamment sélectivement deux niveaux différents, correspondant par exemple à une commande de dégivrage ou bien de désembuage.

L'alimentation en surtension présente bien entendu un caractère temporaire et sa commande peut dépendre d'une temporisation automatique fonction de la température extérieure et/ou de la température du circuit de refroidissement du véhicule et/ou de commandes à la disposition même du conducteur.

Diverses solutions ont déjà été proposées pour réaliser une telle alimentation en surtension dans un véhicule automobile.

L'une des premières solutions proposées est par exemple celle décrite dans le document US-A-4 678 982, qui décrit un système élévateur de tension par l'intermédiaire d'un transformateur couplé aux enroulements statoriques de l'alternateur du véhicule.
Cette technique est cependant coûteuse à mettre en oeuvre du fait du surcroît d'équipements électriques nécessaires, et l'on préfère en général produire la surtension par modification du niveau de régulation de l'alternateur, de manière à obtenir, directement en sortie redressée de ce dernier, une tension pouvant atteindre jusqu'à cinq à six fois la valeur de la tension nominale.

Ce principe est par exemple décrit dans le document EP-A-0 246 976, qui appartient à la demanderesse, où un système d'aiguillage par commutation électrique permet de faire fonctionner l'alternateur soit à sa tension nominale, en permettant donc la charge de la batterie et l'alimentation des circuits principaux, soit en surtension, la puissance produite étant alors exclusivement réservée à l'alimentation du circuit auxiliaire. Le document FR-A-2 645 390 décrit un système voisin de celui du document EP-A-0 246 976.

Le document EP-A-0 325 520 propose également d'utiliser le régulateur de l'alternateur pour faire fonctionner celui-ci en régime de surtension, mais prévoit en supplément un convertisseur statique abaisseur de tension pour l'alimentation simultanée du réseau de bord et du circuit auxiliaire.

Une technique récente pour l'obtention d'un régime de surtension à bord d'un véhicule automobile consiste à prévoir un alternateur polyphasé comportant deux jeux d'enroulements statoriques identiques reliés chacun à un pont redresseur, de manière à délivrer ainsi deux tensions continues respectives distinctes. Ces deux jeux d'enroulements redressés sont connectés, par un système commutateur approprié, soit en parallèle - pour obtenir une courbe de débit bien adaptée à l'alimentation d'un réseau de bord à tension nominale -, soit en série - pour obtenir une tension et un courant importants à un régime de rotation faible, par exemple un régime de rotation correspondant au ralenti du moteur du véhicule.

Bien entendu, toute commutation d'une configuration à une autre, et toute commutation de l'ensemble série ou parallèle vers la batterie et le réseau de bord ou vers le circuit auxiliaire, est précédée d'une désexcitation de l'alternateur, de manière à réaliser ces commutations à courant pratiquement nul. Les diverses commutations et le fonctionnement du dispositif de désexcitation et de réamorçage de l'alternateur sont pilotés par un circuit de commande en fonction d'un certain nombre d'entrées relatives à l'état du circuit d'alimentation électrique, à la situation du véhicule (par exemple donnée par des capteurs de température) et de commandes appliquées par le conducteur.

Le document FR-A-2 630 271, qui appartient à la demanderesse, décrit en particulier un tel système à commutation série/parallèle pour la production d'un régime de surtension permettant d'alimenter un circuit auxiliaire tel qu'un circuit de chauffage rapide pour le dégivrage d'un pare-brise.

Cette technique à commutation série/parallèle s'avère, en pratique, la mieux adaptée à une telle fonction, dans la mesure où elle permet l'appel d'une puissance électrique très importante, de l'ordre de 1000 à 1500 W malgré une relativement faible vitesse de rotation de l'alternateur.

Ces considérations sont d'autant plus critiques que les techniques récentes permettent de réaliser des pare-brise comportant une couche "composite" formant résistance chauffante à couche mince d'une valeur de l'ordre de 2 ohms, permettant un apport thermique très important, et donc un dégivrage très rapide, en alimentant cette résistance chauffante sous une tension de l'ordre de 45 à 55 V. Une fois le dégivrage réalisé, l'application d'une tension plus faible à la résistance (par exemple une tension de l'ordre de 28 V) permet d'établir un régime prolongé de désembuage.

La contrepartie de ces avantages est la plus grande complexité des commutations, avec les risques corrélatifs de défaillances, notamment des relais réalisant ces diverses commutations. En particulier, un défaut de commutation présente le risque de placer la batterie et le réseau de bord en situation de surcharge, avec des conséquences dommageables ou dangereuses telles que par exemple la destruction des lampes du véhicule, un risque d'incendie ou même l'explosion de la batterie si par exemple la surtension venait à être directement appliquée aux bornes de cette dernière.

Un autre risque est celui lié à la possibilité de mise en court-circuit de l'un des enroulements statoriques redressés, qui présente également un risque dommageable important pour l'alternateur.

Le document FR-A-2 645 390 précité propose un circuit de protection permettant d'éviter l'application à la batterie et au circuit de bord d'une tension supérieure à la tension nominale en cas de défaillance du système de commande de dégivrage en surtension du pare-brise électrique. Toutefois, dans ce document, la surtension est obtenue, comme on l'a indiqué plus haut, par simple action sur le circuit de régulation de l'alternateur, donc par un système de mise en surtension essentiellement électronique, n'impliquant qu'une commutation très simple (commutateur unique à deux positions) entre circuit auxiliaire et circuit principal.

Au contraire, dans le cas d'un système de mise en surtension par commutation série/parallèle d'enroulements statoriques multiples, la surtension résulte d'une commande essentiellement électromécanique, par l'intermédiaire d'un système complexe à relais, impliquant le pilotage simultané et sans défaut d'au moins trois commutateurs pour l'établissement des diverses tensions de sortie possibles, et non d'une commande directement appliquée au circuit électronique de régulation de l'alternateur.

L'un des buts de la présente invention est de proposer un circuit de protection pour un système d'alimentation en surtension d'un circuit auxiliaire par commutation série/parallèle de bobinages statoriques, qui assure une protection complète contre des défauts de position des commutateurs précités à la fois :
- en empêchant la tension de régulation appliquée à la batterie et au réseau de bord de dépasser la tension nominale lorsque l'alternateur est connecté à la batterie, soit de façon prévue par le fonctionnement soit à la suite d'une défaillance d'un ou de plusieurs éléments de commutation (la pluralité de commutations à réaliser impliquant une multiplicité de situations de défaillance possibles) ; et
- en coupant l'excitation de l'alternateur, donc en faisant passer à zéro le courant débité par celui-ci, lorsqu'un enroulement statorique redressé se retrouve inopinément en court-circuit suite à une défaillance d'un ou de plusieurs des commutateurs.

Un autre but de l'invention est de permettre, dans une configuration particulièrement avantageuse, non seulement d'assurer, dans les cas de figure que l'on vient d'indiquer, la protection des divers éléments du circuit électrique contre tout endommagement ou destruction, mais également, en cas de défaillance du système de commutation, de permettre néanmoins un fonctionnement des circuits électriques en "mode dégradé" ; plus précisément, il s'agit de permettre au système électrique, en dépit de l'existence d'une défaillance du système de commutation, d'assurer au moins la permanence de l'alimentation du réseau de bord du véhicule et la recharge de la batterie, donc sans interruption du fonctionnement normal (la conséquence d'une défaillance, quelle qu'elle soit, étant l'impossibilité d'alimenter les circuits auxiliaires pour le dégivrage rapide ou de désembuage, ou bien une alimentation de ces derniers à tension réduite).

A cet effet, l'invention propose un dispositif d'alimentation électrique en régime temporaire de surtension de circuits auxiliaires d'un véhicule automobile, notamment d'un pare-brise électrique chauffant pour le dégivrage ou le désembuage de celui-ci, ce dispositif étant du même type générique que celui du document FR-A-2 630 271 précité, c'est-à-dire comprenant : un alternateur à deux enroulements statoriques redressés délivrant chacun une tension redressée entre des bornes de sortie correspondantes; un régulateur d'excitation permettant de réguler le courant d'excitation d'un enroulement inducteur de l'alternateur par application d'un signal de pilotage de régulation; des moyens de commutation série/parallèle, comprenant une pluralité de commutateurs reliés, d'une part, aux bornes de sortie de l'alternateur et, d'autre part, à des bornes d'alimentation respectivement en tension nominale et en surtension selon une configuration permettant de délivrer la tension nominale en commutation parallèle et au moins une valeur de surtension en commutation série; une batterie d'accumulateurs, alimentée à la tension nominale par l'alternateur pour permettre sa charge; un réseau de bord, alimenté à la tension nominale par l'alternateur; au moins un circuit auxiliaire, alimenté sélectivement en surtension ; et des moyens de commande des moyens de commutation, pour opérer sélectivement le basculement desdits commutateurs de manière à produire à volonté la tension nominale ou la surtension en fonction de paramètres d'état appliqués en entrée des moyens de commande.

De façon caractéristique de l'invention, un tel dispositif est caractérisé en ce que, lesdits commutateurs étant susceptibles de prendre une pluralité de configurations de commutation différentes comprenant des configurations normales et des configurations anormales, les moyens de commande comprennent des moyens protecteurs pour détecter une configuration anormale et empêcher toute application d'une surtension à la batterie et au réseau de bord, ces moyens protecteurs coopérant avec le régulateur d'excitation de manière à réduire à une valeur voisine de la tension nominale la tension, produite par la configuration d'enroulements statoriques redressés commutés, appliquée à la batterie et au réseau de bord, et ceci au moins dans certaines configurations anormales.

Très avantageusement, les moyens protecteurs coopèrent également avec le régulateur d'excitation de manière à couper l'excitation du régulateur en cas de configuration entraînant la mise en court-circuit de l'un des enroulements statoriques redressés, afin d'empêcher tout débit substantiel de courant par ce dernier.

Typiquement, les commutateurs comprennent trois commutateurs à deux positions, à savoir :
un premier commutateur dont le contact mobile est relié à une première borne du premier enroulement statorique redressé, dont un premier contact fixe est relié à une première borne de la batterie, et dont le second contact fixe est relié au circuit auxiliaire,
un second commutateur dont le contact mobile est relié à une seconde borne du premier enroulement statorique redressé, dont un premier contact fixe est relié à une première borne du second enroulement statorique redressé et dont le second contact fixe est relié à la seconde borne dudit second enroulement statorique redressé, elle-même reliée à un potentiel de référence, et
un troisième commutateur monté en interrupteur et interposé entre ladite première borne du second enroulement statorique redressé et ladite première borne de la batterie,
tandis que la seconde borne de la batterie est reliée au potentiel de référence.

Dans ce cas, les moyens protecteurs peuvent comprendre :
des premiers moyens à semi-conducteurs aptes à détecter la fermeture intempestive du troisième commutateur pendant que le premier commutateur relie la première borne du premier enroulement statorique redressé au circuit auxiliaire et pendant que le second commutateur relie la seconde borne du premier enroulement statorique redressé à la première borne du second enroulement statorique redressé, et à relier ladite première borne du second enroulement statorique redressé à l'entrée de régulation par l'intermédiaire d'une partie de ces moyens à semi-conducteurs;
des seconds moyens à semi-conducteurs aptes à détecter la liaison intempestive, via le premier commutateur, de la première borne du premier enroulement statorique redressé au réseau de bord pendant que le second commutateur relie la seconde borne du premier enroulement statorique redressé à la première borne du second enroulement statorique redressé et pendant que le troisième commutateur est ouvert, et à relier ladite première borne du premier enroulement statorique redressé à l'entrée de régulation par l'intermédiaire d'une partie de ces moyens à semi-conducteurs; et
des troisièmes moyens à semi-conducteurs aptes à détecter la liaison intempestive, via le premier commutateur, de la première borne du premier enroulement statorique redressé au réseau de bord, ainsi que la fermeture intempestive du troisième commutateur, pendant que le second commutateur relie la seconde borne du premier enroulement statorique redressé à la première borne du second enroulement statorique redressé, et à appliquer à l'entrée de régulation une tension proche de zéro par l'intermédiaire d'une partie de ces moyens à semi-conducteurs.

D'autres caractéristiques et avantages de l'invention apparaîtront à la lecture de la description détaillée ci-dessous, faite en référence aux dessins annexés.

La figure 1 est un schéma synoptique fonctionnel général du circuit électrique d'un véhicule automobile permettant l'établissement d'un régime de surtension par commutation série/parallèle d'enroulements statoriques séparés d'un même alternateur.

La figure 2 est un schéma électronique d'un exemple de réalisation d'un circuit de protection selon l'invention, appliqué au système d'alimentation électrique de la figure 1.

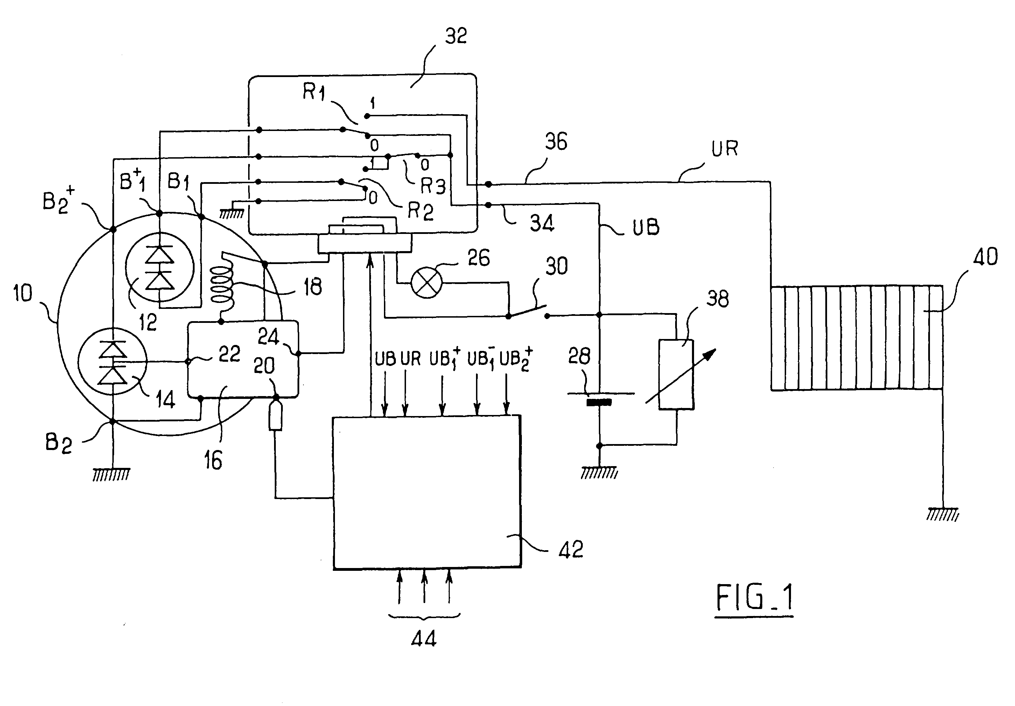

Sur la figure 1, on a représenté de manière générale les circuits d'alimentation d'un véhicule automobile auxquels peuvent être appliqués les enseignements de la présente invention.

Ces circuits comprennent un alternateur 10 pourvu de deux jeux d'enroulements statoriques identiques et distincts, connectés chacun à un pont redresseur respectif. Chacun de ces ensembles, que l'on appellera par la suite "enroulements statoriques redressés" et qui sont respectivement référencés 12 et 14, délivrent une tension redressée d'alternateur sur les bornes correspondantes, désignées respectivement B1+ et B1- pour l'ensemble 12, et B2+ et B2- pour l'ensemble 14.

L'alternateur 10 comporte également un régulateur d'excitation 16 permettant de réguler le courant d'excitation de l'enroulement inducteur 18 de l'alternateur 10 et donc la tension de sortie délivrée par chacun des enroulements statoriques redressés 12 et 14. Ce régulateur d'excitation 16 comporte notamment une entrée de pilotage extérieur 20 ( désignée communément par "sense"), une entrée de signal de phase 22 et une sortie 24 permettant de commander l'allumage éventuel d'une lampe 26 pour signaler au conducteur un défaut de régulation ou une anomalie de fonctionnement de l'alternateur (cette lampe 26 étant reliée au pôle positif de la batterie 28 du véhicule via le contact d'allumage 30).

Un tel type d'alternateur à deux enroulements statoriques redressés, ainsi que son régulateur d'excitation, est bien connu de l'homme de l'art et ne sera donc pas décrit plus en détail.

Chacun des enroulements statoriques redressés 12 et 14 délivre entre ses bornes une tension régulée à une valeur nominale de 14 V.

L'enroulement statorique redressé 14 a sa borne B2-reliée à la masse, et les trois autres bornes B2+, B1- et B1+ sont reliées à un bloc de commutation 32 permettant de connecter soit en série soit en parallèle les deux enroulements statoriques redressés 12 et 14 et de délivrer en sortie différentes tensions correspondantes.

Le bloc 32 comporte à cet effet trois commutateurs R1, R2 et R3 à deux positions, actionnés par relais. On a noté "0" sur la figure la position "repos" de chacun des commutateurs et "1" la position "travail".

Le pôle commun du commutateur R1 est relié à la borne B1+, celui du commutateur R2, à la borne B1-, et celui du commutateur R3, à la borne B2+.

Le bloc 32 comporte deux sorties, désignées 34 et 36. La sortie 34 est reliée à la fois au contact repos du commutateur R1 et au contact repos du commutateur R3. La sortie 36 est reliée au contact travail du commutateur R1. Par ailleurs, le contact repos du commutateur R2 est relié à la masse, et son contact travail au pôle commun, lui-même relié à la borne B2+, du commutateur R3 (dont le contact travail est en l'air).

On expliquera plus loin en détail les configurations possibles des divers commutateurs R1, R2 et R3. On peut cependant déjà indiquer qu'en régime normal de fonctionnement (c'est-à-dire en l'absence d'anomalie de commutation) on obtient sur la sortie 34 une tension de bord UB régulée à une tension de l'ordre de 14 V, permettant de recharger la batterie 28 et d'alimenter les divers éléments électriques du réseau de bord schématisé en 38. La sortie 36, quant à elle, permet, à la demande du conducteur ou de façon automatique, de disposer d'une surtension UR appliquée à un élément auxiliaire tel qu'un pare-brise chauffant 40. Cette surtension peut être plus ou moins importante selon la configuration de commutation, par exemple une surtension de l'ordre de 28 V environ pour un désembuage et de 50 V environ pour un dégivrage rapide.

Les trois commutateurs du bloc 32 sont actionnés par un circuit de commande 42 recevant en entrée un certain nombre de signaux, ci-après désignés "paramètres d'état", incluant notamment des paramètres 44 liés au véhicule tels que vitesse nulle, levier de vitesse ou sélecteur au point mort, etc. ainsi que des paramètres d'environnement tels que température extérieure, éventuellement température intérieure du véhicule, etc. par rapport à une valeur de référence. Les paramètres d'état comportent également l'état de commandes spécifiques susceptibles d'être actionnées par le conducteur.

Le circuit 42 reçoit en outre des paramètres représentatifs de l'état du circuit électrique, comprenant les tensions UB1+, UB1- et UB2+ présentes sur les bornes B1+, B1- et B2+ de l'alternateur 10, ainsi que les tensions UB et UR présentes sur les sorties 34 et 36, respectivement, du bloc de commutation 32.

Le circuit de commande 42 produit essentiellement deux signaux de sortie, l'un pour la commande des relais des commutateurs R1, R2 et R3, l'autre pour le pilotage extérieur du régulateur 16 (entrée 20).

En ce qui concerne ces fonctions, le bloc de commande 42 est pour l'essentiel comparable à celui décrit dans le document FR-A-2 645 390 précité. Ce bloc de commande permet de réaliser, de manière séquentielle et conditionnelle, le passage aux différentes positions (régime permanent, désembuage, dégivrage rapide) que l'on décrira ci-dessous, en assurant des commutations à courant pratiquement nul par désexcitation préalable de l'alternateur et en fonction des paramètres indiqués plus haut (paramètres d'état et tensions).

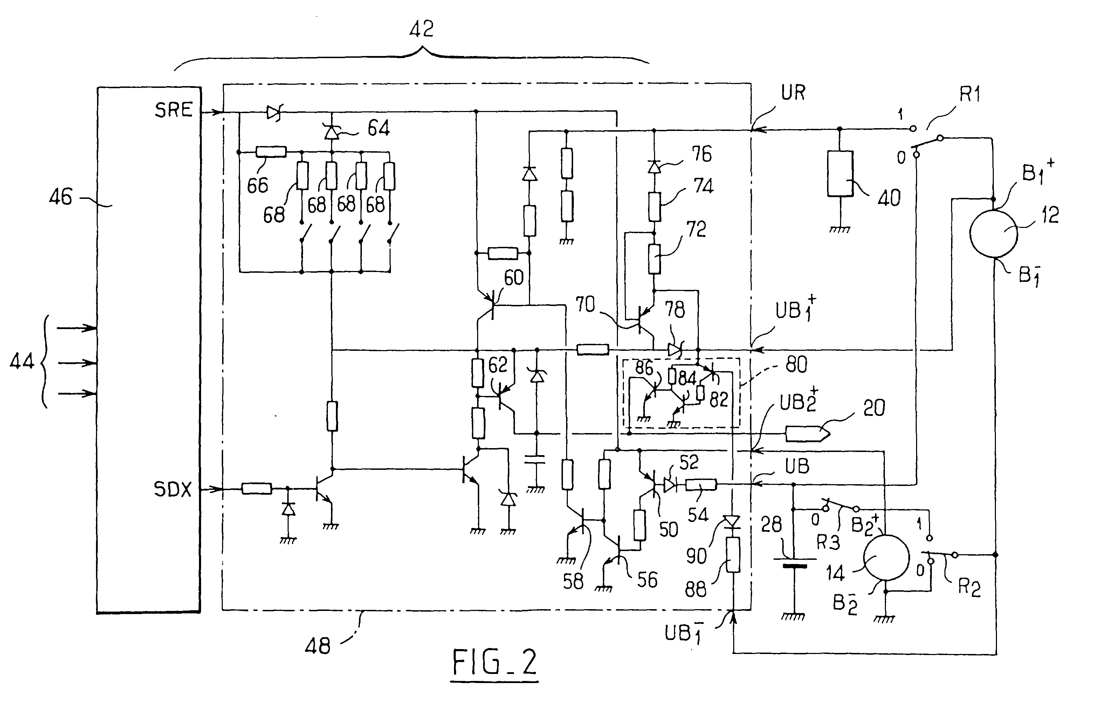

A cet effet, comme on l'a illustré figure 2, le bloc de commande 42 comporte un circuit 46 produisant, en fonction des paramètres d'état 44, un signal SDX de commande de désexcitation de l'alternateur et un signal SRE de commande de réamorçage de l'alternateur. Ce circuit 46 correspond essentiellement à celui décrit dans le document FR-A-2 645 390 précité, auquel on pourra se référer pour de plus amples détails (les signaux SDX et SRE sont respectivement désignés "scdexc" et "scream" dans ce document).

Ce circuit 46 est interfacé avec les autres éléments du circuit électrique que l'on a décrit plus haut en référence à la figure 1 (enroulements statoriques redressés 12 et 14, batterie 28, pare-brise chauffant 40, commutateurs R1, R2 et R3 et entrée de pilotage 20 du régulateur) par l'intermédiaire d'un circuit 48, spécifique de l'invention, permettant d'assurer une protection complète du système électrique et de gérer les éventuels défauts de commutation en permettant de maintenir un fonctionnement "en mode dégradé" du réseau de bord.

On va maintenant décrire les différentes configurations, tant normales qu'anormales, des commutateurs R1, R2 et R3. Ces commutateurs étant susceptibles de prendre chacun deux états distincts (0 ou 1), huit cas de figure sont donc à envisager. Ces cas de figure, que l'on appellera "états" et auxquels on se référera par un numéro compris de 1 à 8, sont résumés par le tableau ci-dessous (la différence entre l'état n° 7 et l'état n° 7bis sera expliquée plus bas).

| État n° | R1 | R2 | R3 | Situation | UB | UR |
|---|---|---|---|---|---|---|
| 8 | 1 | 1 | 1 | Dégivrage rapide | 12V | 50V |
| 7 | 1 | 1 | 0 | Désembuage | 14V | 28V |
| 7bis | 1 | 1 | 0 | - Anomalie - | 14V | 28V |
| 6 | 1 | 0 | 1 | - Anomalie - | 14V | 25V |
| 5 | 1 | 0 | 0 | - Anomalie - | 14V | 0V |
| 4 | 0 | 1 | 1 | - Anomalie - | 14V | 0V |
| 3 | 0 | 1 | 0 | - Anomalie - | 14V | 0V |
| 2 | 0 | 0 | 1 | - Anomalie - | 14V | 0V |
| 1 | 0 | 0 | 0 | Régime permanent | 14V | 0V |

Comme on peut le voir, seuls trois états (n°1, 7 et 8) sont des états normaux de fonctionnement, correspondant respectivement à un régime permanent (recharge de batterie, alimentation du circuit de bord), à un désembuage du pare-brise et à un dégivrage rapide de celui-ci. Les autres états (n° 2 à 7 et 7bis) correspondent à des défauts de commutation et devront donc être gérés par le circuit de protection 48 de l'invention.

On va décrire ci-dessous, pour chacun des états, le comportement du circuit de la figure 2 et en particulier le rôle des moyens de protection pour toutes les situations d'anomalie.

### État n° 1

Cet état correspond, comme on l'a indiqué, à un état de fonctionnement en régime permanent où les commutateurs R1, R2 et R3 sont tous à l'état "repos". Dans cette configuration, les deux enroulements statoriques redressés sont connectés en parallèle et la régulation est pilotée de manière à obtenir en sortie une tension de l'ordre de 14 V, permettant d'assurer simultanément l'alimentation du réseau de bord et la recharge de la batterie (on a dans ce cas UB = 14 V et UR = 0, les circuits auxiliaires n'étant pas alimentés).

### État n° 8

Dans cet état, les enroulements statoriques redressés sont connectés en série et la régulation est commandée de manière à obtenir une tension UR = 50 V environ pour l'alimentation du circuit auxiliaire, pour permettre un dégivrage rapide.

Le commutateur R3 étant en position "travail" donc ouvert, la batterie et le réseau de bord sont déconnectés de l'alternateur, et le réseau de bord est donc alimenté à une tension UB = 12 V environ par la seule batterie, cette dernière n'étant pas rechargée pendant cette phase, temporaire, de dégivrage rapide.

### État n° 7 ou 7bis

Dans cet état, les commutateurs R1 et R2 sont basculés à la position "travail", ce qui a pour effet de connecter en série les enroulements statoriques redressés et de permettre la production d'une tension UR = 28 V environ (régulation par couplage magnétique) pour l'alimentation du circuit auxiliaire et UB = 14 V pour la recharge de la batterie et l'alimentation du réseau de bord.

Cette configuration correspond à un fonctionnement normal (commande de désembuage), mais peut également résulter d'une défaillance du commutateur R3 lors d'un passage à l'état n° 8.

C'est dans ce cas, que l'on appelle "état 7bis", que va intervenir le circuit de protection 48.

Ce circuit est réalisé conformément au schéma illustré figure 2, auquel on se reportera pour le détail des différents éléments et de la manière dont ils sont combinés.

Le passage à l'état n° 7bis au lieu de l'état n° 8 du fait d'une défaillance de R3 implique de protéger la batterie et les circuits de bord à l'encontre de la surtension normalement produite par l'alternateur pour assurer le dégivrage rapide. Dans cette situation, la condition fermée du commutateur R3 va fermer sur lui-même le circuit constitué par le transistor 50, la diode 52 montée dans le circuit de base de celui-ci et la résistance série 54, bloquant ainsi le transistor 50. Ce blocage va avoir pour effet de bloquer également le transistor 56 monté dans le circuit de collecteur du transistor 50 et, par voie de conséquence, de mettre en conduction le transistor 58 monté en cascade avec le transistor 56. La mise en conduction du transistor 58 va permettre, quant à elle, la mise en conduction du transistor 60, ce qui va créer une liaison directe (à la tension V_{CESAT} des transistors 60 et 62 près) entre la sortie B2+ de l'enroulement redressé 14 et l'entrée de pilotage 20 du régulateur de l'alternateur, sans passer par l'étage formé par la diode Zener écrêteuse 64 et le réseau de résistances 66 et 68 (les résistances 68 étant destinées à être combinées pour ajuster de façon précise la valeur de la surtension normalement appliquée à l'état n° 8).

La tension de régulation de l'alternateur est donc forcée à une valeur d'environ 14 V au lieu de 50 V, l'enroulement redressé 14 délivrant une tension régulée de 14 V sur le réseau de bord et l'enroulement redressé 12 étant également régulé à une tension du même ordre, indirectement, par couplage magnétique (cette tension peut cependant varier sensiblement en fonction de la répartition des charges entre les enroulements 12 et 14).

Quant au circuit auxiliaire constitué par le pare-brise chauffant 40, celui-ci est alimenté à une tension égale ou sensiblement supérieure à 28 V, ce qui permet d'obtenir un fonctionnement "en mode dégradé" consistant, bien que le dégivrage en surtension à 50 V ne soit pas applicable du fait de la défaillance, à réaliser un désembuage par application d'une tension (28 V) plus élevée que la tension nominale et donc d'aboutir au résultat recherché, bien qu'avec un temps de chauffage plus long.

### État n° 6

Cet état correspond à une défaillance apparaissant lorsque le circuit est commandé à l'état n° 8 mais que le commutateur R2 reste à la position "repos" au lieu de passer à la position "travail".

Cette défaillance ne provoque cependant ni court-circuit ni risque de surcharge de la batterie ou du réseau de bord, car les enroulements redressés ne sont plus connectés en série du fait de la défaillance de R2.

Cette défaillance ne met pas en action le circuit électronique 48 ; en effet, dans ce cas, l'enroulement redressé 12 alimente le circuit auxiliaire 40 à une tension de l'ordre de 25 V (au lieu de 50 V) régulée par couplage magnétique, tandis que l'enroulement redressé 14, non connecté, est régulé normalement à 14 V et assure l'alimentation du circuit de bord et la recharge de la batterie.

### Etat n° 5

Cet état résulte d'une défaillance à la fois de R2 et R3 lors d'une commutation à l'état n° 8.

L'enroulement redressé 12 va se trouver alors connecté sur le circuit auxiliaire 40, avec une tension de régulation d'environ 14 V résultant d'un couplage magnétique. Le circuit auxiliaire est donc encore alimenté, en dépit de la double défaillance, bien qu'à une tension de chauffage plus faible.

L'enroulement redressé 14, quant à lui, va se trouver régulé à 14 V par mise en oeuvre des éléments 50 à 62 du circuit de protection 48, de la même manière que ce qui avait été décrit pour une défaillance du seul commutateur R3 (passage à l'état n° 7bis).

### État n° 4

Cet état résulte d'une commutation à l'état n° 8, avec une défaillance du commutateur R1 restant à la position "repos". De ce fait, les enroulements redressés 12 et 14 vont se trouver connectés en série, et la borne B1+ va se retrouver reliée au circuit de bord et à la batterie au lieu de l'être au circuit auxiliaire 40, du fait de la défaillance de R1.

Dans le circuit de collecteur du transistor 70 se trouve la diode Zener 78 qui, reliée à la borne B1+ de l'enroulement redressé 12, provoque normalement le blocage du transistor 70. La déconnexion du circuit auxiliaire, c'est-à-dire une tension UR = 0, va provoquer la mise en conduction du transistor 70 relié à la borne UR par l'intermédiaire des résistances 72, 74 et de la diode 76. Cette mise en conduction du transistor 70 va relier l'entrée de pilotage 20, via le transistor 62 précédemment décrit, à la tension présente sur la borne B1+, conduisant donc à une régulation de l'ensemble série 12, 14 à la tension nominale de 14 V. Dans cette configuration, le réseau de bord est normalement alimenté, la batterie rechargée, et le circuit auxiliaire reste isolé.

### État n° 3

Cet état résulte d'une commutation à l'état n° 8, avec défaillance simultanée des commutateurs R1 et R3.

Dans cette configuration, l'enroulement redressé 12 se retrouve en court-circuit. Cette situation est gérée par un circuit spécifique 80 placé entre la borne B1+ de l'enroulement redressé 12 et l'entrée de pilotage 20 du régulateur de l'alternateur. Ce circuit comporte trois transistors 82, 84 et 86 montés de la manière illustrée. La base du transistor 82, quant à elle, est reliée à la borne B1- de l'enroulement redressé 12 par l'intermédiaire de la résistance 88 et la diode 90. L'ensemble est tel que, en cas de mise en court-circuit de l'enroulement redressé 12, le transistor se bloque, ce qui aura pour effet de rendre bloquant le transistor 84 et donc conducteur le transistor 86. L'entrée de pilotage 20 va alors, par voie de conséquence, se retrouver à un potentiel (la tension VCESAT du transistor 86) pratiquement nul, se qui aura pour effet d'empêcher, par coupure du courant d'excitation, les enroulements redressés 12 et 14 de débiter du courant, en les protégeant donc des conséquences du court-circuit.

En pratique, le circuit de protection de l'invention permet de réaliser une coupure de l'excitation en une durée inférieure à 10 ms, donc sans risque de dégradation irréversible de l'alternateur.

### État n° 2

Cet état résulte, lors d'une commutation à l'état n° 8, d'une défaillance simultanée de R1 et de R2, qui restent à l'état "repos".

Dans ce cas, les deux enroulements redressés ne sont plus connectés en série.

En ce qui concerne l'enroulement 12, la protection qui va intervenir est la même que celle décrite plus haut pour l'état n° 4, à savoir une détection de l'absence de tension aux bornes du circuit auxiliaire et un forçage de l'entrée de pilotage pour permettre une régulation à 14 V. Cette dernière tension est appliquée à la batterie et au circuit de bord du fait du maintien du commutateur R1 à la position repos.

L'enroulement redressé 14, quant à lui, est régulé indirectement à une tension de l'ordre de 14 V par couplage magnétique, mais n'est en fait connecté à aucune charge du fait de la position "travail" du commutateur R3.

Comme on a pu le voir à l'examen de tous les cas de figure possibles, quelle que soit la configuration de commutation la batterie et les circuits de bord sont toujours protégés contre une surcharge, et les enroulements redressés sont protégés contre les conséquences d'un court-circuit.

Bien entendu, d'autres circuits réalisant les mêmes fonctions sont envisageables, par exemple des circuits mettant en oeuvre des mesures de tension ou de courant et forçant à une valeur de tension nominale (14 V dans le cas général) la régulation de l'alternateur, ou provoquant la coupure du courant d'excitation après comparaison avec des valeurs de référence. De tels circuits impliquent cependant un nombre de composants plus important et un ajustage de seuils de déclenchement de circuits comparateurs, en dépit de tension et de courant de travail pouvant varier dans des plages très larges.

## Revendications

1. Un dispositif d'alimentation électrique en régime temporaire de surtension de circuits auxiliaires d'un véhicule automobile, notamment d'un pare-brise électrique chauffant pour le dégivrage ou le désembuage de celui-ci, ce dispositif comprenant :
- un alternateur (10) à deux enroulements statoriques redressés (12, 14) délivrant chacun une tension redressée (UB1+, UB2+) entre des bornes de sortie correspondantes,
- un régulateur d'excitation (16) permettant de réguler le courant d'excitation d'un enroulement inducteur (18) de l'alternateur par application d'un signal de pilotage de régulation sur une entrée de régulation (20),
- des moyens de commutation série/parallèle (32), comprenant une pluralité de commutateurs (R1, R2, R3) reliés, d'une part, aux bornes de sortie de l'alternateur (B1+, B1-, B2+, B2-) et, d'autre part, à des bornes d'alimentation (34, 36) respectivement en tension nominale (UB) et en surtension (UR) selon une configuration permettant de délivrer la tension nominale en commutation parallèle et au moins une valeur de surtension en commutation série,
- une batterie d'accumulateurs (28), alimentée à la tension nominale par l'alternateur pour permettre sa charge,
- un réseau de bord (38), alimenté à la tension nominale par l'alternateur,
- au moins un circuit auxiliaire (40), alimenté sélectivement en surtension, et
- des moyens (42) de commande des moyens de commutation, pour opérer sélectivement le basculement desdits commutateurs de manière à produire à volonté la tension nominale ou la surtension en fonction de paramètres d'état (44, UB, UR, UB1+, UB1-, UB2+) appliqués en entrée des moyens de commande,
dispositif caractérisé en ce que, lesdits commutateurs (32) étant susceptibles de prendre une pluralité de configurations de commutation différentes comprenant des configurations normales et des configurations anormales, les moyens de commande (42) comprennent des moyens protecteurs (48) pour détecter une configuration anormale et empêcher toute application d'une surtension à la batterie et au réseau de bord, ces moyens protecteurs coopérant avec le régulateur d'excitation (16) de manière à réduire à une valeur voisine de la tension nominale la tension, produite par la configuration d'enroulements statoriques redressés commutés, appliquée à la batterie et au réseau de bord lors d'au moins certaines des configurations anormales.

2. Le dispositif de la revendication 1, dans lequel les moyens protecteurs coopèrent également avec le régulateur d'excitation de manière à couper l'excitation du régulateur en cas de configuration entraînant la mise en court-circuit de l'un des enroulements statoriques redressés, afin d'empêcher tout débit substantiel de courant par ce dernier.

3. Le dispositif de la revendication 1 ou 2, dans lequel les commutateurs comprennent trois commutateurs à deux positions, à savoir :
un premier commutateur (R1) dont le contact mobile est relié à une première borne (B1+) du premier enroulement statorique redressé (12), dont un premier contact fixe est relié à une première borne de la batterie (28), et dont le second contact fixe est relié au circuit auxiliaire (40),
un second commutateur (R2) dont le contact mobile est relié à une seconde borne (B1-) du premier enroulement statorique redressé, dont un premier contact fixe est relié à une première borne (B2+) du second enroulement statorique redressé (14) et dont le second contact fixe est relié à la seconde borne (B2-) dudit second enroulement statorique redressé, elle-même reliée à un potentiel de référence, et
un troisième commutateur (R3) monté en interrupteur et interposé entre ladite première borne (B2+) du second enroulement statorique redressé (14) et ladite première borne de la batterie (28),
tandis que la seconde borne de la batterie (28) est reliée au potentiel de référence.

4. Le dispositif de la revendication 3, caractérisé en ce que les moyens protecteurs comprennent des premiers moyens à semi-conducteurs (50, 56, 58, 60, 62) aptes à détecter la fermeture intempestive du troisième commutateur (R3) pendant que le premier commutateur (R1) relie la première borne (B1+) du premier enroulement statorique redressé (12) au circuit auxiliaire et pendant que le second commutateur (R2) relie la seconde borne (B1-) du premier enroulement statorique redressé (12) à la première borne (B2+) du second enroulement statorique redressé (14), et à relier ladite première borne (B2+) du second enroulement statorique redressé (14) à l'entrée de régulation (20) par l'intermédiaire d'une partie de ces moyens à semi-conducteurs.

5. Le dispositif de la revendication 3 ou 4, caractérisé en ce que les moyens protecteurs comprennent des seconds moyens à semi-conducteurs (70, 72, 74, 76, 62) aptes à détecter la liaison intempestive, via le premier commutateur (R1), de la première borne (B1+) du premier enroulement statorique redressé au réseau de bord (38) pendant que le second commutateur (R2) relie la seconde borne (B1-) du premier enroulement statorique redressé (12) à la première borne (B2+) du second enroulement statorique redressé (14) et pendant que le troisième commutateur (R3) est ouvert, et à relier ladite première borne (B1+) du premier enroulement statorique redressé (14) à l'entrée de régulation par l'intermédiaire d'une partie de ces moyens à semi-conducteurs.

6. Le dispositif de l'une des revendications 3 à 5, caractérisé en ce que les moyens protecteurs comprennent des troisièmes moyens à semi-conducteurs (82, 84, 86, 90) aptes à détecter la liaison intempestive, via le premier commutateur (R1), de la première borne (B1+) du premier enroulement statorique redressé (12) au réseau de bord (38), ainsi que la fermeture intempestive du troisième commutateur (R3), pendant que le second commutateur (R2) relie la seconde borne (B1-) du premier enroulement statorique redressé (12) à la première borne (B2+) du second enroulement statorique redressé (14), et à appliquer à l'entrée de régulation une tension proche de zéro par l'intermédiaire d'une partie de ces moyens à semi-conducteurs.

## Patentansprüche

1. Stromversorgungsvorrichtung für Nebenschaltungen eines Kraftfahrzeugs unter zeitweiligem Überspannungszustand, insbesondere für eine beheizbare Windschutzscheibe zu deren Enteisung oder Beschlagfreihaltung, wobei diese Vorrichtung folgendes umfaßt:
- einen Wechselstromgenerator (10) mit zwei gleichgerichteten Ständerwicklungen (12, 14), die jeweils eine gleichgerichtete Spannung (UB1+, UB2+) zwischen entsprechenden Ausgangsklemmen liefern;
- einen Erregungsregler (16), der es ermöglicht, den Erregerstrom einer Erregerwicklung (18) des Wechselstromgenerators durch Anlegen eines Regelsteuersignals an einem Regeleingang (20) zu regeln;
- Reihen-/Parallelschaltmittel (32) mit einer Mehrzahl von Schaltern (R1, R2, R3), die einerseits mit den Ausgangsklemmen des Wechselstromgenerators (B1+, B1-, B2+, B2-) und andererseits mit Anschlußklemmen (34, 36) für die Stromversorgung mit Nennspannung (UB) bzw. mit Überspannung (UR) entsprechend einer Konfiguration verbunden sind, die es ermöglicht, die Nennspannung in Parallelschaltung und wenigstens einen Überspannungswert in Reihenschaltung zu liefern;
- eine Batterie (28), die durch den Wechselstromgenerator mit der Nennspannung gespeist wird, um sie zu laden;
- ein Bordnetz (38), das durch den Wechselstromgenerator mit der Nennspannung gespeist wird;
- wenigstens eine Nebenschaltung (40), die wahlweise mit Überspannung gespeist wird, und
- Steuermittel (42) zur Steuerung der Schaltmittel, um wahlweise das Kippen der besagten Schalter zu bewirken, um nach Wunsch die Nennspannung oder die Überspannung in Abhängigkeit von Zustandsparametern (44, UB, UR, UB1+, UB1-, UB2+) zu erzeugen, die am Eingang der Steuermittel angelegt werden,
**dadurch gekennzeichnet,** daß, während die besagten Schalter (32) eine Mehrzahl von verschiedenen Schaltkonfigurationen mit normalen Konfigurationen und anormalen Konfigurationen annehmen können, die Steuermittel (42) Schutzmittel (48) umfassen, um eine anormale Konfiguration zu erfassen und jedes Anlegen einer Überspannung an die Batterie und an das Bordnetz zu verhindern, wobei diese Schutzmittel mit dem Erregungsregler (16) zusammenwirken, um die durch die Konfiguration von geschalteten gleichgerichteten Ständerwicklungen erzeugte, an die Batterie und an das Bordnetz angelegte Spannung auf einen Wert nahe der Nennspannung zumindest in bestimmten anormalen Konfigurationen zu verringern.

2. Vorrichtung nach Anspruch 1, wobei die Schutzmittel außerdem mit dem Erregungsregler zusammenwirken, um den Erregerstrom des Reglers im Falle einer Konfiguration auszuschalten, die das Kurzschließen einer der gleichgerichteten Ständerwicklungen bewirkt, um jede substantielle Stromabgabe durch letztere zu verhindern.

3. Vorrichtung nach Anspruch 1 oder 2, wobei die Schalter drei Schalter mit zwei Positionen umfassen, und zwar:
einen ersten Schalter (R1), dessen beweglicher Kontakt mit einer ersten Klemme (B1+) der ersten gleichgerichteten Ständerwicklung (12) verbunden ist, dessen erster feststehender Kontakt mit einer ersten Klemme der Batterie (28) verbunden ist und dessen zweiter feststehender Kontakt mit der Nebenschaltung (40) verbunden ist,
einen zweiten Schalter (R2), dessen beweglicher Kontakt mit einer zweiten Klemme (B1-) der ersten gleichgerichteten Ständerwicklung verbunden ist, dessen erster feststehender Kontakt mit einer ersten Klemme (B2+) der zweiten gleichgerichteten Ständerwicklung (14) verbunden ist und dessen zweiter feststehender Kontakt mit der zweiten Klemme (B2-) der besagten zweiten gleichgerichteten Ständerwicklung verbunden ist, die ihrerseits mit einem Bezugspotential verbunden ist, und
einen dritten Schalter (R3), der als Ausschalter geschaltet und zwischen der besagten ersten Klemme (B2+) der zweiten gleichgerichteten Ständerwicklung (14) und der besagten ersten Klemme der Batterie (28) geschaltet ist,
während die zweite Klemme der Batterie (28) mit dem Bezugspotential verbunden ist.

4. Vorrichtung nach Anspruch 3, **dadurch gekennzeichnet,** daß die Schutzmittel erste Halbleitermittel (50, 56, 58, 60, 62) umfassen, um das unvorhergesehene Schließen des dritten Schalters (R3) zu erfassen, während der erste Schalter (R1) die erste Klemme (B1+) der ersten gleichgerichteten Ständerwicklung (12) mit der Nebenschaltung verbindet und während der zweite Schalter (R2) die zweite Klemme (B1-) der ersten gleichgerichteten Ständerwicklung (12) mit der ersten Klemme (B2+) der zweiten gleichgerichteten Ständerwicklung (14) verbindet, und um die besagte erste Klemme (B2+) der zweiten gleichgerichteten Ständerwicklung (14) über einen Teil dieser Halbleitermittel mit dem Regeleingang (20) zu verbinden.

5. Vorrichtung nach Anspruch 3 oder 4, **dadurch gekennzeichnet,** daß die Schutzmittel zweite Halbleitermittel (70, 72, 74, 76, 62) umfassen, um die über den ersten Schalter (R1) vorgenommene unvorhergesehene Verbindung der ersten Klemme (B1+) der ersten gleichgerichteten Ständerwicklung mit dem Bordnetz (38) zu erfassen, während der zweite Schalter (R2) die zweite Klemme (B1-) der ersten gleichgerichteten Ständerwicklung (12) mit der ersten Klemme (B2+) der zweiten gleichgerichteten Ständerwicklung (14) verbindet und während der dritte Schalter (R3) geöffnet ist, und um die besagte erste Klemme (B1+) der ersten gleichgerichteten Ständerwicklung (12) über einen Teil dieser Halbleitermittel mit dem Regeleingang zu verbinden.

6. Vorrichtung nach einem der Ansprüche 3 bis 5, **dadurch gekennzeichnet**, daß die Schutzmittel dritte Halbleitermittel (82, 84, 86, 90) umfassen, um die über den ersten Schalter (R1) vorgenommene unvorhergesehene Verbindung der ersten Klemme (B1+) der ersten gleichgerichteten Ständerwicklung (12) mit dem Bordnetz (38) sowie das unvorhergesehene Schließen des dritten Schalters (R3) zu erfassen, während der zweite Schalter (R2) die zweite Klemme (B1-) der ersten gleichgerichteten Ständerwicklung (12) mit der ersten Klemme (B2+) der zweiten gleichgerichteten Ständerwicklung (14) verbindet, und um an den Regeleingang über einen Teil dieser Halbleitermittel eine Spannung nahe Null anzulegen.

## Claims

1. A device for the electrical supply, under temporary overvoltage conditions, of auxiliary circuits of a motor vehicle, notably for a heated electric windscreen for defrosting or demisting thereof, this device comprising:
- an alternator (10) with two rectified stator windings (12, 14) each delivering a rectified voltage (UB1+, UB2+) between corresponding output terminals,
- an excitation regulator (16) for regulating the excitation current of a field coil winding (18) of the alternator by applying a regulation control signal at a regulation input (20),
- serial/parallel switching means (32), comprising a plurality of switches (R1, R2, R3) connected on the one hand to the output terminals of the alternator (B1+, B1-, B2+, B2-) and on the other hand to supply terminals (34, 36) respectively under nominal voltage (UB) and overvoltage (UR) according to a configuration making it possible to deliver the nominal voltage in parallel switching and at least one overvoltage value in serial switching,
- a battery of accumulators (28), fed at the nominal voltage by the alternator to enable it to be charged,
- an onboard electrical network (38), supplied at the nominal voltage by the alternator,
- at least one auxiliary circuit (40), supplied selectively under overvoltage, and
- means (42) of controlling the switching means, in order to selectively effect the switching of the said switches so as to produce as required the nominal voltage or overvoltage as a function of state parameters (44, UB, UR, UB1+, UB1-, UB2+) applied at the input of the control means,
a device characterised in that, the said switches (32) being able to take a plurality of different switching configurations comprising normal configurations and abnormal configurations, the control means (42) comprise protection means (48) for detecting an abnormal configuration and preventing any application of an overvoltage to the battery and to the onboard electrical network, these protection means cooperating with the excitation regulator (16) so as to reduce to a value close to the nominal voltage the voltage, produced by the configuration of switched rectified stator windings, applied to the battery and to the onboard electrical network during at least some of the abnormal configurations.

2. The device of Claim 1, in which the protection means also cooperate with the excitation regulator so as to cut off the excitation of the regulator in the event of a configuration giving rise to the short-circuiting of one of the rectified stator windings, in order to prevent any substantial output of current by the latter.

3. The device of Claim 1 or 2, in which the switches comprise three two-position switches, namely:
a first switch (R1) whose moving contact is connected to a first terminal (B1+) of the first rectified stator winding (12), a first fixed contact of which is connected to a first terminal of the battery (28), and whose second fixed contact is connected to the auxiliary circuit (40),
a second switch (R2) whose moving contact is connected to a second terminal (B1-) of the first rectified stator winding, a first fixed contact of which is connected to a first terminal (B2+) of the second rectified stator winding (14) and whose second fixed contact is connected to the second terminal (B2-) of the said rectified stator winding, itself connected to a reference potential, and
a third switch (R3) connected as a breaker and interposed between the said first terminal (B2+) of the second rectified stator winding (14) and the said first terminal of the battery (28),
whilst the second terminal of the battery (28) is connected to the reference potential.

4. The device of Claim 3, characterised in that the protection means comprise first semiconductor means (50, 56, 58, 60, 62) able to detect the unwanted closure of the third switch (R3) whilst the first switch (R1) connects the first terminal (B1+) of the first rectified stator winding (12) to the auxiliary circuit and whilst the second switch (R2) connects the second terminal (B1-) of the first rectified stator winding (12) to the first terminal (B2+) of the second rectified stator winding (14), and to connect the said first terminal (B2+) of the second rectified stator winding (14) to the regulation input (20) by means of some of these semiconductor means.

5. The device of Claim 3 or 4, characterised in that the protection means comprise second semiconductor means (70, 72, 74, 76, 62) able to detect the unwanted connection, via the first switch (R1), of the first terminal (B1+) of the first rectified stator winding to the onboard electrical network (38) whilst the second switch (R2) connects the second terminal (B1-) of the first rectified stator winding (12) to the first terminal (B2+) of the second rectified stator winding (14) and whilst the third switch (R3) is open, and to connect the said first terminal (B1+) of the first rectified stator winding (14) to the regulation input by means of some of these semiconductor means.

6. The device of one of Claims 3 to 5, characterised in that the protection means comprise third semiconductor means (82, 84, 86, 90) able to detect the unwanted connection, via the first switch (R1), of the first terminal (B1+) of the first rectified stator winding (12) to the onboard electrical network (38), and the unwanted closure of the third switch (R3), whilst the second switch (R2) connects the second terminal (B1-) of the first rectified stator winding (12) to the first terminal (B2+) of the second rectified stator winding (14), and to apply a voltage close to zero to the regulation input by means of some of these semiconductor means.
